# EUROPÄISCHE PATENTSCHRIFT

(11) **EP 1 135 639 B1**
(45) Veröffentlichungstag und Bekanntmachung des Hinweises auf die Patenterteilung: **02.07.2003**
(21) Anmeldenummer: 99958147.3
(22) Anmeldetag: 01.12.1999
(51) Int. Cl.: F16K 31/06

(54) **DIREKT GESTEUERTES MAGNETVENTIL**
DIRECTLY CONTROLLED MAGNETIC VALVE
ELECTROVALVE A COMMANDE DIRECTE

(30) Priorität: 01.12.1998 DE 19856476
(43) Veröffentlichungstag der Anmeldung: 26.09.2001
(73) Patentinhaber: RAPA RAUSCH & PAUSCH ELEKTROTECHNISCHE SPEZIALFABRIK GMBH, D-95100 Selb (DE)
(72) Erfinder: DOEHLA, Werner, D-95482 Gefrees (DE); SCHIEWECK, Werner, D-95199 Thierstein (DE)
(74) Vertreter: Pfeiffer, Rolf-Gerd, Dipl.-Phys.
(86) Internationale Anmeldenummer: EP9909331
(87) Internationale Veröffentlichungsnummer: WO00032971

(56) Entgegenhaltungen:
- DE-A- 3 345 928
- US-A- 4 595 170
- US-A- 5 423 347
- US-A- 5 791 630

## Beschreibung

Die Erfindung betrifft ein direkt gesteuertes Magnetventil gemäß der Gattung der Patentansprüche, das für die Verbindung bzw. Absperrung zweier Gas-, insbesondere Luftvolumina eine große Nennweite der Sitzöffnung aufweist.
Es sind bereits geschlossene vorgesteuerte Magnetventilsysteme bekannt, bei denen eine Druckdifferenz zwischen Ventileingang und -ausgang mittels einer Membrane oder eines Kolbens zur Betätigung eines Dichtelements genutzt wird. Ist die Magnetspule stromlos, so gelangt der Eingangsdruck über eine Ausgleichbohrung in den Raum über der Membrane und drückt diese fest auf den Ventilsitz. Öffnet der Magnet den Vorsteuerkanal, bricht der Druck über der Membrane zusammen. Durch den anstehenden Eingangsdruck wird die Membrane hochgehoben und das Ventil geöffnet. Dabei ist allerdings zur Ventilbetätigung eine Druckdifferenz zwischen den beiden Ausgängen jedes Ventilsystems erforderlich. Aus der Hydrauliktechnik ist es weiterhin bekannt, in Magnetventilen Magnetanker als druckausgleichende Schieber zu gestalten. Zur Abdichtung des Ausgleichsspaltes, die im übrigen nicht immer vollkommen ist, werden bewegliche Dichtsysteme, bspw. an den Umfangsflächen der Magnetanker benutzt, siehe DE 33 45 928 A1. Abgesehen davon, daß bei sehr langen abzudichtenden Spalten unter Kältebedingungen die Gefahr der Vereisung und des Festsetzens des Schiebers besteht, sind bei der Bewegung des Schiebers relativ hohe Losbrech- und Bewegungskräfte erforderlich. Auch wurde bereits vorgeschlagen, einen Differenzkolben durch ein Magnetventil vorzusteuern. Die Bewegungskraft wird dabei durch die Druckbeaufschlagung oder Entlüftung eines Steuerraumes erzeugt. Von Nachteil sind die verwendeten bewegten Dichtungen, die hohe Losbrechkräfte bedingen und über ihre Lebensdauer nicht ausreichend dicht sind. Beim Druckentlasten des Steuerraumes wird die Schaltluft in die Atmosphäre abgelassen, wodurch Funktionsstörungen im Ventilsystem auftreten können. Vorgeschlagen wurden auch Ventile mit vorgesteuerter Membran. Die Bewegung erfolgt in diesem Fall durch Druckdifferenzen zwischen zwei Ventilausgängen im Zusammenwirken mit einer Feder. Zur Realisierung dieses Vorschlags wird Schaltluft mit ihren nachteiligen Nebenwirkungen benötigt. Schließlich sind bei der ebenfalls vorgeschlagenen Verwendung von Sitzventilen auf Grund der anstehenden hohen Druckkräfte zum Öffnen und Schließen der Ventile sehr große Feder- bzw. Magnetkräfte erforderlich, die im vorhandenen Bauraum oft nicht realisiert werden können.
Der Erfindung liegt die Aufgabe zugrunde, die vorstehend genannten Mängel zu vermeiden und ein Magnetventil mit großer Nennweite zu schaffen, das ein geringes Bauvolumen bei gleichzeitig geringem Leistungsbedarf benötigt, minimale Leckagen nach außen und zwischen den beiden Gasvolumen bei geschlossenem Ventil zeigt und einen schnellen Druckausgleich nach der Ventilöffnung sowie ein schnelles Schalten des Ventils ermöglicht, unabhängig davon, auf welcher Ventilseite der höhere Druck anliegt.

Gemäß der Erfindung wird die Aufgabe durch die Merkmale des ersten Patentanspruchs gelöst. Infolge der durch den gesamten Magnetkern und damit durch den Schieber und Stößel gehenden Bohrung findet ein Druckausgleich statt, so daß auf beide Frontflächen des Schiebers gleiche Kräfte wirken. Vorteilhaft haben die ersten und zweiten Dichtmittel die gleiche Anordnung bezüglich der geometrischen Längsachse des Kerns; die am Dichtteller und am Dichtsitz sowie an der Frontfläche des Schiebers und der dieser benachbarten gehäusefesten Fläche angeordneten, miteinander korrespondierenden Dichtmittel haben dieselbe Orientierung zur und denselben Abstand von der geometrischen Längsachse. Dadurch können bei der gleichzeitigen Funktion beider Dichtungsmittel Toleranzen von Schieber und Stößel bzw. Magnetkern und Gehäuse ausgeglichen werden. Wird der am Dichtteller befestigte hohlzylindrische Stößel in die Bohrung am Schieber eingepreßt, so kann während des Pressens das Preßwerkzeug schrittweise zugestellt und gleichzeitig der Durchfluß gemessen werden bis die ideale Abstimmung erreicht ist. Es ist auch möglich, zunächst die Istmaße der Bauteile zu messen und auf Grund der gemessenen Istwerte das erforderliche Preßmaß zu errechnen. Dabei ist die Verpressung so ausgelegt, daß keine Leckage über die Preßlänge auftritt.

Die miteinander korrespondierenden Dichtmittel sind entweder im Magneten des Ventils an den einander zugekehrten, benachbarten Frontflächen von Schieber und Magnetkern oder außerhalb des Magneten an der anderen Frontfläche des Schiebers und einer benachbarten, gehäusefesten, vorzugsweise kreisringförmigen Kragfläche vorgesehen. Die miteinander korrespondieren Dichtmittel auf den einander zugekehrten Flächen sind jeweils ein aus einem Elastomer bestehender Dichtring, der sich auf oder in der entsprechenden Frontfläche befindet, und eine ringförmige Aufwölbung o. ä. auf der zugehörigen Frontfläche. Es ist auch möglich, die Elastomerdichtringe mit Wülsten zu versehen (sie aus ihrer Frontfläche herausragen zu lassen), die dann auf die entsprechenden Frontflächen drücken, welche in diesem Fall eben gestaltet sein können. In jedem Fall können die Dichtungsringe fest und dicht in die entsprechenden Frontflächen eingebettet, bspw. einvulkanisiert sein. Die Einbettung selbst ist zum Toleranzausgleich durch den Einbau zusätzlicher Federn vorteilhaft federnd gestaltet.
Vorteilhaft ist der Dichtteller mit einem Stößel versehen, der in die Bohrung des Schiebers hineinragt und vorzugsweise in diesen eingepreßt ist. Die einander zugekehrten Frontflächen von Schieber und festem Kern können eben oder mit ringförmigen Stufen versehen sein.
Mit dem erfindungsgemäßen direktgesteuerten, der Umschaltung zwischen zwei Gasvolumen dienenden Magnetventil kann ein zweites, vorzugsweise ebenfalls direktgesteuertes Magnetventil zum Befüllen und Absperren der gasförmigen Medien (Luft) kombiniert sein. Absperrventil und Umschaltventil können unmittelbar an einem Block angeordnet sein. Ihre Spannungsversorgung geschieht dabei vorteilhaft über einen gemeinsamen Anschlußstecker. Die Befüllung und Entleerung der Luftvolumina erfolgt in diesem Fall durch die mittigen, im wesentlichen in der geometrischen Achse von Kern und Schieber des Umschaltventils liegenden Ausgleichsbohrungen, die sämtlich die von den ersten und zweiten Dichtungsmitteln umschlossenen Flächen durchstoßen. Dadurch wird eine komplizierte Verbohrungen vermieden und Platz und Material eingespart.
Es ist auch möglich, Anker (Schieber), Stößel und Dichtteller des erfindungsgemäßen Magnetventils in einem Stück herzustellen. Davon unabhängig ergibt sich eine weitere vorteilhafte Ausnihrungsform, wenn sich der Kern zwischen dem Anker und dem Dichtteller befindet und die ersten und zweiten Dichtungsmittel auf entsprechenden Frontflächen auf auf der Seite des Dichttellers angeordnet sind. In dem Fall kann die zunächst mittige Bohrung bei entsprechender Ausbildung und Anordnung der übrigen Magnetventilteile auch seitlich aus dem Stößel herausgeführt werden.
Das erfindungsgemäße Ventil kann so gestaltet sein, daß es bei nicht bestromtem Elektromagneten geöffnet (stromlos offen) oder geschlossen (stromlos geschlossen) ist. Besonders vorteilhaft ist die erfindungsgemäße Lösung bei stromlos offenen Magnetventilen, weil bei ihnen durch den Druckausgleich eine geringe Federkraft zum Abwerfen des Ankers und damit zum Abheben des Dichttellers von seinem Sitz notwendig ist. Ebenso ist wegen der geringen Federkraft relativ wenig Energie zum Schließen und Geschlossenhalten des Magnetventils erforderlich.

Die Erfindung wird nachstehend an Hand zweier Axialschnitte darstellender Ausführungsbeispiele näher erläutert. Es zeigen:
- Fig. 1: ein erfindungsgemäßes, stromlos offenes Magnetventil und
- Fig. 2: ein zweites erfindungsgemäßes, stromlos geschlossenes Magnetventil.

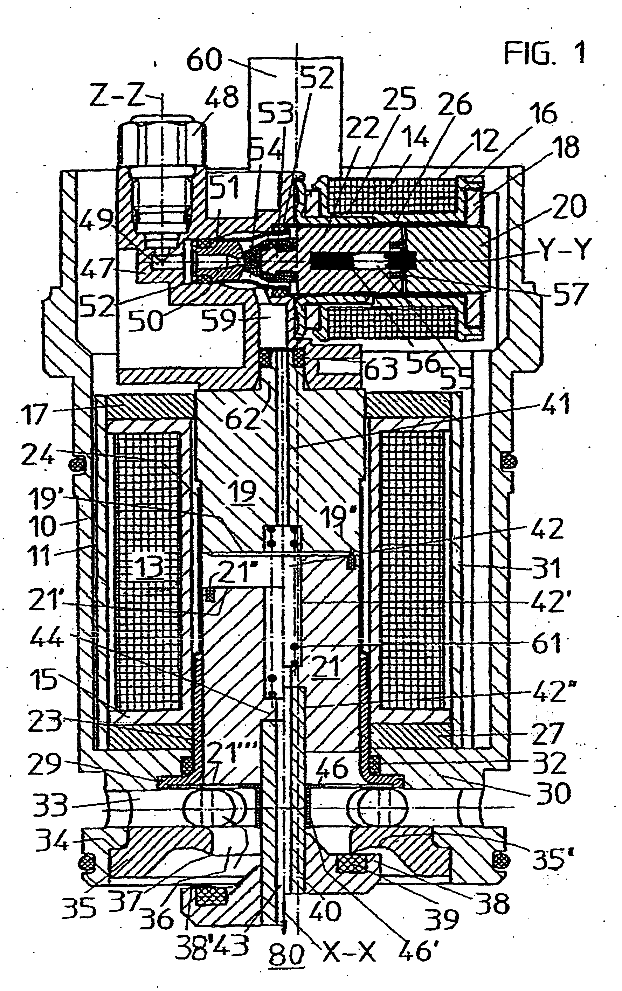

In Fig. 1 sind in einem Gehäuse 10 zwei direktgesteuerte Magnetventile 11, 12 mit geometrischen Achsen X-X bzw. Y-Y vorgesehen, von denen jedes eine Magnetspule 13 bzw. 14, einen hohlzylindrischen Spulenträger 15 bzw. 16, ein mit dem jeweiligen Spulenträger an einem Ende angelegte Scheibe 17 bzw. ein teilweise hinter der Zeichenebene angeordneter Bügel 18 und einen der zugehörigen Scheibe 17 bzw. dem entsprechenden Bügelende benachbart liegenden Kern 19 bzw. 20 aufweist, der in den jeweils zugehörigen hohlen Spulenträger 15 bzw. 16 von einer Seite her hineinragt. Außerdem ist jedem Magnetventil 11 bzw. 12 ein Schieber oder Anker 21 bzw. 22 zugeordnet, der in Gleithülsen 23, 24 bzw. 26 gleiten kann, die auf den jeweiligen Kern 19 bzw. 20 aufgeschoben und mit diesem dicht verschweißt sind.
Die Gleithülse 23 des Magnetventils 11 besitzt einen Flansch 29, mit dessen Hilfe sie sich an einem nach innen ragenden kreisringförmigen Teil 30 des Gehäuses 10 abstützt. Das Magnetventil 11 ist darüber hinaus von einer zylindrischen Umhüllung 31 umgeben, mit der es ebenso wie mit der Scheibe 27 am Gehäuseteil 30 anliegt. Für das Magnetventil 11 ergibt sich somit ein magnetischer Kreis über die Elemente 27, 23, 21, 19, 17, 31, 27. Zwischen der Gleithülse 23 und dem Gehäuseteil 30 ist ein Dichtungsring 32 vorgesehen.
In Fig. 1 befinden sich unterhalb des kreisförmigen Teils 30 Luftkanäle 33 und ein in das Ventilgehäuse 10 eingeschraubter, an einer Ringschulter 34 des Gehäuses 10 anliegender und abgedichteter Ventilsitz 35 mit einer vom Anker 21 abgewandten Frontfläche 35' und mit einer zentralen Öffnung 36, deren Durchmesser kleiner ist als der Innendurchmesser des hohlzylindrischen Spulenträgers 15. In der Nähe seiner zentralen Öffnung 36 hat der Ventilsitz 35 einen ringförmigen, von den Luftkanälen 33 weggerichteten Vorsprung 37 (Aufwölbung), der mit einem in einen Dichtteller 38 eingelassenen Dichtungsring 39 zusammenwirkt und bei geschlossenem Ventil 11 gegen den Dichtungsring 39 gepreßt wird. Mit dem Dichtteller 38, dessen dem Anker 21 zugewandte Frontfläche mit 38' bezeichnet ist, ist ein hohlzylindrischer, zum Anker 21 hin gerichteter Stößel 40 verbunden. Kern 19, Anker 21 und Stößel 40 weisen axiale Bohrungen 41 bzw. 42 bzw. 43 mit teilweise unterschiedlichen Durchmessern auf, die zusammen die Ausgleichbohrung des Ventils 11 bilden. Dabei sind die Durchmesser der Bohrungen 41, 42 und 43 im wesentlichen gleich. Im Inneren der Bohrung 42 befindet sich eine Ringschulter 44, die die Bohrung 42 in ein oberes Federgehäuse 42' für eine Druckfeder 61 und ein unteres Einpreßstück 42" für den Stößel 40 unterteilt und als ein Anschlag für die Druckfeder 61 dient. Der Stößel 40 kann mit dem Dichtteller 38 einstückig ausgebildet sein. Am Flansch 29 ist eine in ihrer Ebene perforierte Anschlagscheibe 46 für die andere Frontfläche 21''' des Schiebers 21 befestigt, die einen Führungsansatz 46' für den Stößel 40 besitzt. An ihren einander zugekehrten Frontflächen (Polflächen) 19' und 21' weisen der Kern 19 einen ringförmigen Vorsprung (Aufwölbung) 19" und der Schieber 21 einen entsprechenden, in die Fläche 21' eingelassenen Dichtungsring 21" auf. Der Vorsprung 19" wird bei geschlossenem Ventil 11 in den Dichtungsring 21" eingepreßt. Die ringförmigen Vorsprünge 19" und 37 sowie die mit ihnen korrespondierenden Dichtungsringe 21" und 39 haben den gleichen Abstand von der geometrischen Achse X-X und sind zu dieser koaxial angeordnet. Die Dichtungselemente 19", 21", 37, 39 begrenzen auf den Frontflächen 19', 21', 21"' und 38' zumindest nahezu dieselben Druckflächen, auf die der Gasdruck wirken kann. Für die Erfindung ist die Simultanwirkung der Dichtungselemente 19", 21" bzw. 37, 39 von entscheidender Bedeutung.
Im Gehäuse 10 ist oberhalb des Magnetventils 11 in einem Block 47 das zweite Magnetventil 12 angeordnet und fest mit dem ersten Magnetventil verbunden. In den Block 47 ist ein Druckgasanschluß 48 so eingearbeitet, daß seine geometrische Achse Z-Z rechtwinklig zur Ventilachse Y-Y gerichtet ist. Eine Verbindungsleitung 49 führt durch eine zentrale Öffnung 50 in einem Ventilsitz 51 zum Ventil 12. Der Ventilsitz 51 ist mit Hilfe eines Elastomerringes 52 im Block 47 gasdicht angeordnet. Die zentrale Öffnung 50 ist mit einem Stößel 53 verschließbar, der mit dem Anker 22 verbunden, vorzugsweise an ihn angearbeitet und in der Nähe des Ventilsitzes 51 mit einem Elastomerüberzug 54 versehen ist. Im Anker 22 und Kern 20 befindet sich eine Axialbohrung 55 für ein federndes Druckmittel 56, das bestrebt ist, den Stößel 53 gegen den Ventilsitz 51 zu pressen. Der Elastomerüberzug 54 verhindert zusammen mit dem Elastomerring 52 Leckagen am Ventil 12. Ein Wulstring 57 an der dem Kern 20 zugewandten Frontfläche des Ankers 22 dient der Anschlagdämpfung. Mit Hilfe der Hülse 25 ist das Ventil 12 an den Block 47 angeflanscht und an diesem befestigt. Vom Ventil 12 führt eine Verbindungsleitung 59 zur axialen Ausgleichbohrung im Ventil 11. Der Kern 19 ist zum Anschluß der Verbindungsleitung 59 mit einem Stutzen 62 versehen, über den ein 0-Ring 63 gestülpt ist. Beide Ventile 11, 12 haben einen gemeinsamen elektrischen Anschluß 60. Sie sind so aufgebaut, daß im stromlosen Zustand das Magnetventil 11 geöffnet und das Magnetventil 12 geschlossen ist.
Die rechte Hälfte der Fig. 1 zeigt das Ventil 11 im geschlossenen und die linke Hälfte im geöffneten Zustand. Sind beide Ventile 11 und 12 geöffnet, so baut sich durch die Ausgleichbohrung 41, 42, 43 im an die Ausgleichbohrung bzw. an die Kanäle 33 angeschlossenen Volumen 80 bzw. 82 der gleiche Druck auf wie er am Druckgasanschluß 48 anliegt. Wird danach das Magnetventil 12 geschlossen, so wird der aufgebaute Druck beibehalten, das Magnetventil 12 ist also maßgeblich für das Druckniveau. Erfolgt eine Schließung des Magnetventils 11 (rechte Hälfte in Fig. 1), so kann sich im Volumen 80 ein anderer Druck aufbauen als im Volumen 82.

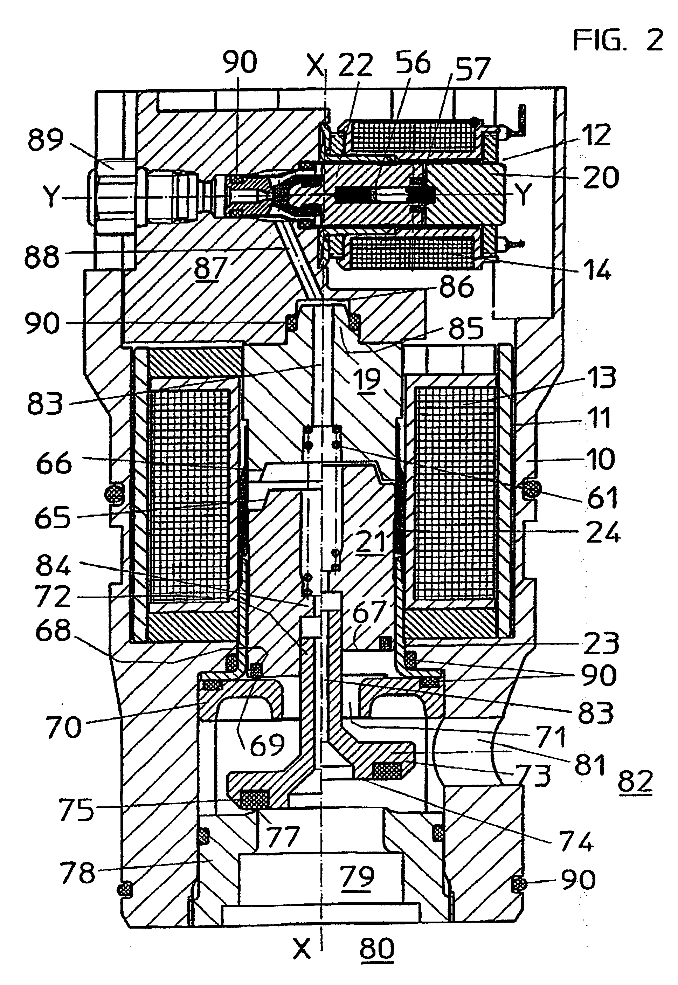

In Fig. 2 sind in einem Gehäuse 10 wieder zwei Magnetventile 11, 12 (ähnlich wie zu Fig. 1 beschrieben) mit Magnetspulen 13, 14, Magnetkernen 19, 20 und Magnetankern 21, 22 dargestellt, die im stromlosen Zustand durch federnde Druckmittel (bspw. mechanische Federn) 61, 56 vom Kern 19, 20 weggedrückt werden. Die geometrischen Achsen der Magnetventile 11, 12 sind mit X-X und Y-Y bezeichnet und im wesentlichen rechtwinklig zueinander gerichtet. Der Anker 21 und der Kern 19 weisen einander zugekehrte stufenförmige Polflächen (Frontflächen) 65, 66 auf, die ein Ineinanderschieben von Anker 21 und
Kern 19 und damit erhöhte magnetische Kräfte am Beginn der Ankerbewegung ermöglichen. Der Anker 21 gleitet in Gleithülsen 23, 24 und ist, abweichend von Fig. 1, an seiner zur Polfläche 65 entgegengesetzt liegenden Frontfläche 67 mit einem in sie eingelassenen Dichtungsring 68 versehen, dem eine ringförmige Aufwölbung 69, auf der dem Anker 21 zugewandten Fläche einer Anschlagscheibe 70 entspricht, die eine axiale Durchführung 71 aufweist. Durch diese ragt der Stößel 72 eines Dichttellers 73, der an seiner vom Anker 21 abgewandten Fläche 74 mit einem Dichtungsring 75 versehen ist. Das freie Ende des Stößels 72 ist mit dem Anker 21 dicht verpreßt. Mit diesem wirkt eine ringförmige Aufwölbung 77 an einem Ventilsitz 78 zusammen, der in Fig. 2 von unten in das Gehäuse 10 eingeschraubt ist. Die Dichtungsringe 68 und 75 sowie die Aurwölbungen 69 und 77 sind im wesentlichen koaxial zur und im gleichen Abstand von der geometrischen Achse X-X angeordnet. Der Ventilsitz 78 besitzt koaxial zur Achse X-X eine Ausnehmung 79, durch die der Innenraum des Ventils 11 mit einem im übrigen nicht dargestellten Gasvolumen 80 verbunden sein kann. Ebenso hat das Gehäuse 10 in Höhe des Dichttellers 73 mindestens eine im wesentlichen horizontal, quer zur Ventilachse X-X gerichtete Öffnung 81, durch die der Ventilinnenraum mit einem im übrigen nicht dargestellten, vom Gasvolumen 80 verschiedenen Gasvolumen 82 verbindbar ist. Stößel 72, Anker 21 und Kern 19 sind mit einer koaxial zur Achse X-X gerichteten Ausgleichbohrung 83 versehen, die im Anker 21 und im unteren Stück des Kerns 19 erweitert und im Anker 21 mit einer Ringschulter 84 zur Abstützung der Feder 61 versehen ist. Der Stößel 72 ist justierbar in den erweiterten Teil der Ausgleichbohrung 83 im Anker 21 unterhalb der Ringschulter 84 eingepreßt. Anker 21, Stößel 72 und Dichtteller 73 sind in Fig. 2 links in Schließstellung und rechts in Öffnungsstellung des Ventils 11 gezeigt. In der Schließstellung sind die beiden Gasvolumina 80, 82 voneinander getrennt und in Öffnungsstellung miteinander verbunden.
Der Kern 19 ist an seiner dem Anker 21 abgewandten Seite axial mit einem Stutzen 85 versehen, der in eine Ausnehmung 86 eines im Gehäuse 10 befindlichen, auf das Ventil 11 aufgesetzten Blocks 87 derart hineinragt, daß die Ausgleichbohrung 83 über eine im Block 87 vorgesehene Bohrung 88 mit einem Druckgasanschluß 89 verbunden ist, der mit dem Ventil 12 koaxial zur Achse Y-Y angeordnet ist. Das wie in Fig. 1 aufgebaute Ventil 12 verschließt den Druckgasanschluß 89.
Elastomerdichtungen 90 besorgen die Dichtheit der Ventile 11, 12.
Im übrigen gilt das zu Fig. 1 Gesagte zumindest sinngemäß.

Abweichend von den dargestellten Ausführungsbeispielen liegt es im Rahmen der Erfindung, Anker 21, Stößel 40 und Dichtteller 38, ähnlich wie beim Magnetventil 12 einstückig auszubiden, den Kern 19 zwischen dem Anker 21 und dem Dichtteller 38 anzuordnen und entsprechende Frontflächen für die Dichtungsmittel 19", 21", 37, 39 auf der Seite des Dichttellers 38 vorzusehen, die Ausgleichbohrung 41, 42, 43 nicht durchgehend durch Anker 21, Kern 19, Stößel 40 und Dichtteller 38 zu führen, sondern aus dem Stößel 40 seitlich heraus- und einem entsprechend angeordneten Druckgasanschluß 48 zuzuführen.

### Bezugszeichenliste

- 10: Gehäuse
- 11, 12: Magnetventile(Ventile)
- 13, 14: Magnetspulen
- 15, 16: Spulenträger
- 17, 27: Scheiben
- 18: Bügel
- 19', 21', 21"', 35', 38', 67: Frontflächen
- 19", 37: ringförmige Vorsprünge
- 21, 22: Anker (Schieber)
- 21", 32, 39, 68, 75: Dichtungsringe
- 23, 24, 26: Gleithülsen
- 25: Hülse
- 29: Flansch
- 30: nach innen ragender Teil
- 31: Umhüllung
- 33: Luftkanäle
- 34, 44, 84: Ringschultern
- 35, 51, 78: Ventilsitze
- 36, 50, 81: Öffnungen
- 38, 73: Dichtteller
- 40, 53, 72: Stößel
- 41, 42, 43, 88: Bohrungen
- 42': Federgehäuse
- 42": Einpreßstück
- 46, 70: Anschlagscheibe
- 46': Führungsansatz
- 47, 87: Blöcke
- 48, 89: Druckgasanschlüsse
- 49, 59: Verbindungsleitungen
- 52: Elastomerring
- 54: Elastomerüberzug
- 55: Axialbohrung
- 56, 61: Feder
- 57: Wulstring
- 60: elektrischer Anschluß
- 62, 85: Stutzen
- 63: 0-Ring
- 65, 66: Polflächen
- 69, 77: Aufwölbungen
- 71: Durchführung
- 74: Fläche
- 79, 86: Ausnehmung
- 80, 82: Gasvolumina
- 41, 42, 43; 83: Ausgleichbohrung
- 90: Elastomerdichtungen
- X-X, Y-Y, Z-Z: geometrische Achsen

## Patentansprüche

1. Direkt gesteuertes Magnetventil (11) mit einem in einem Magneten angeordneten festen Kern (19) und einem beweglichen Anker (21), an dem mit Hilfe eines Stößels (40, 72) ein Dichtteller (38, 73) befestigt ist, der beim Betätigen des Ventils (11) mit einem gehäusefest angeordneten Ventilsitz (35, 78) zusammenwirkt, wobei am Pichtteller (38, 73) und am Ventilsitz (35, 78) korrespondierende erste Dichtungsmittel (37, 39, 75, 77) und zumindest am Anker (21) zweite Dichtungsmittel vorgesehen sind, die wie die ersten Dichtungsmittel (37, 39, 75, 77) wenigstens nahezu koaxial zu einer Längsachse X-X des Ventils (11) angeordnet sind, und wobei zumindest der Anker (21), der Stößel (40, 72) und der Dichtteller (38, 73) mittig und parallel zur Längsachse X-X Bohrungen (41, 42, 83) aufweisen, **dadurch gekennzeichnet, daß** die zweiten Dichtungsmittel (19", 21", 68, 69) an einer mit dem Anker (21) fest verbundenen, zur Längsachse X-X im wesentlichen rechtwinklig angeordneten Frontfläche (21', 67) und an einer der Frontfläche (21', 67) parallel und benachbart liegenden gehäusefesten Fläche (19', 70) so vorgesehen sind, dass sie zumindest nahezu dieselbe Druckfläche begrenzen wie die ersten Dichtungsmittel (37, 38, 75, 77) und mit den ersten Dichtungsmitteln gleichzeitig wirksam sind.

2. Direkt gesteuertes Magnetventil nach Anspruch 1, **dadurch gekennzeichnet, daß** die zweiten Dichtungsmittel (19", 21") an der im Magneten befindlichen Frontfläche (21') des Ankers (21) und an der dem Anker benachbarten Frontfläche (19') des Kerns (19) angeordnet sind.

3. Direkt gesteuertes Magnetventil nach Anspruch 1, **dadurch gekennzeichnet, daß** die zweiten Dichtungsmittel (68, 69) an der außerhalb des Magneten befindlichen Fröntfläche (67) des Ankers (21) und an einer dem Anker (21) benachbarten gehäusefesten kreisringförmigen Kragfläche (70) angeordnet sind.

4. Direkt gesteuertes Magnetventil nach Anspruch 1, 2 oder 3, **dadurch gekennzeichnet, daß** die miteinander korrespondierenden Dichtungsmittel (21", 19"; 39, 37; 68, 69; 75, 77) auf den benachbarten Flächen (21', 19'; 35', 38'; 67, 70; 74, 78) einerseits aus einem Elastomer bestehende Dichtungsringe (21", 39, 68, 75) und andererseits ringförmige Aufwölbungen (19", 37, 69, 77) der Flächen sind.

5. Direkt gesteuertes Magnetventil nach Anspruch 1, **dadurch gekennzeichnet, daß** die Dichtungsmittel in die Frontflächen (21', 38', 67, 78) teilweise eingelassene Elastomerringe (21", 39, 68, 75) sind, denen vorzugsweise ebene benachbarte Frontflächen gegenüberstehen.

6. Direkt gesteuertes Magnetventil nach Anspruch 1, **dadurch gekennzeichnet, daß** der Dichtteller (38, 73) mit einem Stößel (40, 72) versehen ist, der in die Bohrung (42) des Ankers (21) hineinragt und in diesen dicht eingepreßt ist.

7. Direkt gesteuertes Magnetventil nach Anspruch 6, **dadurch gekennzeichnet, daß** die Einpreßtiefe des Stößels (40, 72) im Anker (21) variabel ist.

8. Direkt gesteuertes Magnetventil nach Anspruch 1, **dadurch gekennzeichnet, daß** die zueinander benachbart liegenden Frontflächen (21', 19') von Anker (21) und Kern (19) ebene Flächen sind.

9. Direkt gesteuertes Magnetventil nach Anspruch 1, **dadurch gekennzeichnet, daß** die benachbarten Frontflächen von Anker (21) und Kern (19) mit einander entsprechenden ringförmigen Stufen (65, 66) versehen sind.

10. Direkt gesteuertes Magnetventil nach mindestens einem der vorstehenden Anspruche, **gekennzeichnet durch** eine mittig **durch** Kern (19), Anker (21) und Stößel (40, 72) mit Dichtteuer (38, 73) parallel zur Längsachse X-X vorgesehene Bohrung (41, 42, 43) zum Ausgleich von Druckdifferenzen.

11. Direkt gesteuertes Magnetventil nach Anspruch 10, **dadurch gekennzeichnet, daß** ihm ein zweites Magnetventil (12) zum Verschließen der mittigen Bohrung (41, 83) zugeordnet ist

12. Direkt gesteuertes Magnetventil nach Anspruch 11, **dadurch gekennzeichnet, daß** beiden Magnetventilen (11, 12) ein gemeinsamer elektrischer Anschluß (60) zugeordnet ist

13. Direkt gesteuertes Magnetventil nach Anspruch 4 oder 5, **dadurch gekennzeichnet, daß** die Dichtungsringe (21", 68, 39, 75) in Anker (21) und Dichtteller (38, 73) fest und dicht eingebettet sind.

14. Direkt gesteuertes Magnetventil nach Anspruch 13, **dadurch gekennzeichnet, daß** die Dichtungsringe (21", 68, 39, 75) zum Toleranzausgleich federnd eingebettet sind.

15. Direkt gesteuertes Magnetventil nach Anspruch 1 oder 10, **dadurch gekennzeichnet, daß** Anker (21), Stößel (40, 72) und Dichtteller (38, 73) aus einem Stück bestehen.

16. Direkt gesteuertes Magnetventil nach Anspruch 1 oder 15, **dadurch gekennzeichnet, daß** der Kern (19) zwischen dem Anker (21) und dem Dichtteller (38, 73) angeordnet ist, der Stößel (40, 72) durch den Kern (19) hindurchgeführt ist und die ersten und zweiten Dichtungsmittel (39, 37, 75, 77, 19", 21", 68, 69) auf der Seite des Dichttellers (38, 73) angeordnet sind.

17. Direkt gesteuertes Magnetventil nach Anspruch 15, **dadurch gekennzeichnet, daß** die Bohrung (43, 83) quer zur Längsachse X-X aus dem Stößel (40, 72) herausgeführt ist.

## Claims

1. A directly controlled magnetic valve (11) comprising a core (19) fixedly arranged within a magnet, a moveable armature (21), a sealing disk (38, 73), said sealing disk being secured to said armature (21) by means of a tappet (40, 72), and a valve seat (35, 78) fixedly arranged to the valve housing, said sealing disk cooperating with said valve seat when the valve (11) is being actuated, whereby said sealing disk (38, 73) and said valve seat (35, 78) are each provided with first sealing means (37, 39, 75, 77), said first sealing means being adapted to correspond with each other, and second sealing means are provided at least at the armature (21), said second sealing means are arranged as the first sealing means (37, 39, 75, 77) at least approximately coaxially relative to a longitudinally extending axis X-X of the valve (11), and whereby at least the armature (21), the tappet (40, 72), and the sealing disk (38, 73) are provided with central bores (41, 42, 83) extending in parallel to the longitudinally axis X-X, **characterized in that** the second sealing means (19", 21", 68, 69) are provided at a leading face (21', 67), which is fixedly connected to said armature (21) and arranged substantially at right angles to the longitudinal axis X-X, and at a face (19', 70), secured to the housing, in parallel to and adjacently arranged relative to said leading face (21', 67), in such a manner that said second sealing means at least approximately limit the same pressure area as said first sealing means (37, 39, 75, 77) and **in that** the first and the second sealing means are simultaneously effective.

2. A directly controlled magnetic valve as claimed in claim 1, **characterized in that** said second sealing means (19", 21"), are arranged at the leading face (21') of the armature (21) located within the magnet and at the leading face (19') of the core (19) adjacent to the armature.

3. A directly controlled magnetic valve as claimed in claim 1, **characterized in that** said second sealing means (68, 69) are arranged at the leading face (67) of the armature (21) located outside of the magnet and at an annular cantilevered face (70) secured to the housing adjacent to the armature (21).

4. A directly controlled magnetic valve as claimed in claims 1, 2 or 3 **characterized in that** the sealing means (21", 19"; 39, 37; 68, 69; 75, 77) corresponding with each other on the adjacent races (21', 19; 35', 38'; 67, 70; 74, 78) are, on the one hand, sealing rings (21", 39, 68, 75) made of an elastomer and, on the other hand, annular bulgings-up (19", 37, 69, 77) of the faces.

5. A directly controlled magnetic valve as claimed in claim 1, **characterized in that** the sealing means are elastomer rings (21", 39, 68, 75) partially inserted into the leading faces (21', 38'; 67, 78) which are preferably opposed by adjacent plane leading faces.

6. A directly controlled magnetic valve as claimed in claim 1, **characterized in that** said sealing disk (38, 73) is provided with a tappet (40, 72) which projects into and is tightly press-fitted to the bore (42) of the armature (21).

7. A directly controlled magnetic valve as claimed in claim 6, **characterized in that** the impressive depth of the tappet (40, 72) in the armature (21) is variable.

8. A directly controlled magnetic valve as claimed in claim 1, **characterized in that** the leading faces (21', 19') of the armature (21) and of the core (19), being adjacent to each other, are plane faces.

9. A directly controlled magnetic valve as claimed in claim 1, **characterized in that** the adjacent leading faces of the armature (21) and of the core (19) are provided with annular steps (65, 66) matching each other.

10. A directly controlled magnetic valve as claimed in at least one of the preceding claims, **characterized in that** a bore (41, 42, 43) is provided centrally passing the core (19), the armature (21), and the tappet (40, 72) with the sealing disk (38, 73) in parallel to the geometrical longitudinally extending axis X-X, said bore being adapted for compensating pressure differences.

11. A directly controlled magnetic valve as claimed in claim 10, **characterized in that** a second magnetic valve (12) is associated to said directly controlled magnetic valve, said second magnetic valve being adapted for closing the central bore (41, 83).

12. A directly controlled magnetic valve as claimed in claim 11, **characterized in that** both magnetic valves (11, 12) are provided with a common electrical connection (60).

13. A directly controlled magnetic valve as claimed in claim 4 or 5, **characterized in that** the sealing rings (21", 68, 39, 75) in the armature (21) and in the sealing disk (38, 73) are fixedly and tightly embedded in the same.

14. A directly controlled magnetic valve as claimed in claim 13, **characterized in that** the sealing rings (21", 68, 39, 75) are resiliently embedded for compensating for tolerances.

15. A directly controlled magnetic valve as claimed in claim 1 or 10, **characterized in that** the armature (21), the tappet (40, 72), and the sealing disk (38, 73) consist in one piece.

16. A directly controlled magnetic valve as claimed in claim 1 or 15, **characterized in that** the core (19) is arranged between the armature (21) and the sealing disk (38, 73), that the tappet (40, 72) is passed through the core (19) and **in that** the first and the second sealing means (39, 37, 75, 77, 19", 21", 68, 69;) are arranged on the side of the sealing disk (38, 73).

17. A directly controlled magnetic valve as claimed in claim 15, **characterized in that** the bore (43, 83) is passed out off the tappet (40, 72) diagonally to the longitudinal axis X-X.

## Revendications

1. L'électrovalve à commande directe (11) avec un noyau solide (19) placé dans un aimant et avec une armature mobile (21) sur laquelle est fixé moyennant une tige poussoir (40, 72) un disque d'étanchéité (38, 73) agissant ensemble avec le siège de l'électrovalve (35, 78) et étant solidaire avec l'enceinte lors de l'actionnement de l'électrovalve, le siège de l'électrovalve (35, 78) et le disque d'étanchéité (38, 73) étant dotés des premiers éléments d'étanchéité respectifs (37, 39, 75, 77) et au moins l'armature (21) dotée de seconds éléments d'étanchéité comparables au premiers, étant disposés en position au moins approximativement coaxiale par rapport à l'axe longitudinal X-X de l'électrovalve (11), et où au moins l'armature (21), la tige poussoir (40, 72) et le disque d'étanchéité (38, 73) présentent au milieu et en parallèle par rapport à l'axe longitudinal X-X, des orifices (41, 42, 83), est **caractérisé en ce que** les seconds éléments d'étanchéité (19", 21", 68, 69) sont disposés sur une face frontale (21', 67) reliée de manière solidaire à l'armature (21) et orientés en principe perpendiculairement par rapport à l'axe longitudinal X-X, et sur la face frontale (21', 67) voisine, solidaire de l'enceinte, (19,70) de manière à ce qu'ils délimitent à peu près la même surface de pression que les premiers éléments d'étanchéité (37, 38, 75, 77) et agissant en même temps que les premiers éléments d'étanchéité.

2. L'électrovalve à commande directe suivant la revendication 1 est **caractérisée en ce que** les seconds éléments d'étanchéité (19",21") sont disposés dans l'aimant sur la face frontale (21') de l'armature (21) et sur la face frontale (19') du noyau (19), voisine de l'armature.

3. L'électrovalve à commande directe suivant la revendication 1 est **caractérisée en ce que** les seconds éléments d'étanchéité (68, 69) sont disposés sur la face frontale (67) de l'armature (21) en dehors de l'aimant et sur la collerette circulaire (70) voisine fixée sur l'enceinte.

4. L'électrovalve à commande directe suivant la revendication 1, 2 ou 3 est **caractérisée en ce que** les éléments d'étanchéité (21", 19",39, 37, 68, 69, 75, 77) étant en correspondance les uns avec les autres et situés sur des faces voisines (21', 19', 35', 38', 67, 70, 74, 78) sont d'une part les bagues d'étanchéité en élastomère (21", 39, 68,75) et d'autre part les collerettes circulaires (19", 37, 69, 77) des faces.

5. L'électrovalve à commande directe suivant la revendication 1 est **caractérisée en ce que** les éléments d'étanchéité sont des bagues en élastomère (21", 39, 68, 75) insérées en partie dans des surfaces frontales (21', 38', 67, 78 ), auxquelles sont opposées de préférence des faces frontales planes voisines.

6. L'électrovalve à commande directe suivant la revendication 1 est **caractérisée en ce que** le disque d'étanchéité ( 38, 73) est doté d'une tige poussoir ( 40, 72) qui étant enfoncée par pression et de manière étanche, pénètre de façon saillante dans l'orifice (42) de l'armature (21).

7. L'électrovalve à commande directe suivant la revendication 6 est **caractérisée en ce que** la profondeur de la pénétration de la tige poussoir (40, 72) dans l'armature (21), obtenue par pression, est variable.

8. L'électrovalve à commande directe suivant la revendication 1 est **caractérisée en ce que** les faces frontales voisines (21', 19') les unes par rapport aux autres de l'armature (21) et du noyau (19) sont des faces planes.

9. L'électrovalve à commande directe suivant la revendication 1 est **caractérisée en ce que** les faces frontales voisines les unes par rapport aux autres, de l'armature (21) et du noyau (19) sont dotées de gradins circulaires respectifs (65, 66).

10. L'électrovalve à commande directe suivant au moins une des revendications précédentes est **caractérisée par** la présence d'un orifice (41, 42, 43) assurant l'équilibrage de pression, traversant au milieu et parallèlement à l'axe géométrique longitudinal X-X, le noyau (19), l'armature (21) et la tige poussoir (40, 72) avec le disque d'étanchéité (38, 73).

11. L'électrovalve à commande directe suivant la revendication 10 est **caractérisée en ce que** lui est attribuée une deuxième électrovalve (12) pour fermer l'orifice centrale (41, 83).

12. L'électrovalve à commande directe suivant la revendication 10 est **caractérisée en ce** les deux électrovalves(11, 12) ont un branchement électrique commun (60).

13. L'électrovalve à commande directe suivant les revendications 4 ou 5 est **caractérisées en ce que** les bagues d'étanchéité (21", 68, 39, 75) sur l'armature (21) et le disque d'étanchéité (38, 73) sont insérées de manière solidaire et étanche.

14. L'électrovalve à commande directe suivant la revendication 13 est **caractérisée en ce que** les bagues d'étanchéité (21", 68, 39, 75) sont insérées sur ressort pour équilibrer les tolérances.

15. L'électrovalve à commande directe suivant les revendications 1 ou 10 est **caractérisée en ce que** l'armature (21), la tige poussoir (40, 72) et le disque d'étanchéité (38, 73) forment une seule pièce.

16. L'électrovalve à commande directe suivant les revendications 1 ou 15 est **caractérisée en ce que** le noyau (19) est disposé entre l'armature (21) et le disque d'étanchéité (38, 73), que la tige poussoir (40, 72) passe par le noyau (19) et que les premiers et deuxièmes éléments d'étanchéité (39, 37, 75, 77, 19", 21", 68, 69) sont disposés du côté du disque d'étanchéité (38, 73).

17. L'électrovalve à commande directe suivant la revendication 15 est **caractérisée en ce que** l'orifice (43, 83) en sortant de la tige poussoir (49, 72), est orienté de manière transversal par rapport à l'axe longitudinal X-X.
